# EUROPÄISCHE PATENTSCHRIFT

(11) **EP 0 445 356 B1**
(45) Veröffentlichungstag und Bekanntmachung des Hinweises auf die Patenterteilung: **28.12.1994**
(21) Anmeldenummer: 90117831.9
(22) Anmeldetag: 17.09.1990
(51) Int. Cl.: F01L 1/34, F01L 1/02

(54) **Vorrichtung zum Spannen und Verstellen eines Nockenwellen-Kettentriebes**
Device for tensioning and adjusting a chain drive for camshafts
Dispositif pour tendre et régler un entraînement d'arbres à cames par chaîne

(30) Priorität: 06.03.1990 DE 4006910
(43) Veröffentlichungstag der Anmeldung: 11.09.1991
(73) Patentinhaber: Dr.Ing.h.c. F. Porsche Aktiengesellschaft, 70435 Stuttgart (DE); HYDRAULIK-RING ANTRIEBS- UND STEUERUNGSTECHNIK GmbH, D-72622 Nürtingen (DE)
(72) Erfinder: Trzmiel, Alfred, Dipl.-Ing. FH, W-7441 Grafenberg (DE); Frech, Rolf, Dipl.-Ing. FH, W-7251 Weissach-Flacht (DE); Stephan, Wolfgang, Dipl.-Ing. FH, W-7440 Zizishausen (DE); Hage, Friedhelm, Dipl.-Ing., W-7257 Ditzingen (DE); Ulrich, Johann-Georg, Dipl.-Ing., W-7251 Weissach (DE)

(56) Entgegenhaltungen:
- EP-A- 0 294 559
- DE-A- 3 421 028
- DE-A- 3 534 446
- US-A- 4 862 845
- Automobiltechnische Zeitschrift 93 (1991) 10 Seite 595

## Beschreibung

Die Erfindung betrifft eine Vorrichtung nach dem Oberbegriff des Anspruchs 1.

Aus US-A-4 862 845 ist eine Verstellvorrichtung bekannt, die an einem Kettentrieb zwischen der Einlaßnockenwelle und Auslaßnockenwelle wirksam ist. Mit ihr wird durch Verlängern des Lostrums und Verkürzen des Lasttrums der Kette die relative Drehlage der Einlaßnockenwelle zur Auslaßnockenwelle und somit die Ventilsteuerzeit geändert. Hierzu ist quer zur Kette eine Schiene vorgesehen, deren endseitig gelagerten Kettenräder am Lostrum bzw. Lasttrum angreifen. Zur Kettenverstellung wird die Schiene mittels eines Zahnstangentriebes quer zur Kette verschoben. In einer abgewandelten Ausführungsform dient zum Spannen des einen Kettentrums ein Hydraulik- oder Pneumatikzylinder, da die Spannung nur auf das eine Kettentrum wirkt, wird beim Verstellen der Kette die Kettenspannung verändert.

Bei einer aus DE-A-35 34 446 bekannten Spann- und Verstellvorrichtung für einen zwei Nockenwellen umschlingenden Riementrieb greift an dem einen Riementrum ein elastisch abgestütztes Spannelement, an dem anderen Riementrum ein Verstellelement an. Ein Verbindungselement koppelt das Spannelement mit dem Verstellelement. Wird nun das Verstellelement quer zum Riemen verschoben, um die relative Drehlage der beiden Nockenwellen zueinander zu verstellen, so wird zwangsläufig auch das Spannelement verschoben und somit die Riemenspannung verändert.

Die US-PS 4,862,845 behandelt eine Vorrichtung zum Spannen und Verstellen einer Ketten, die zwischen zwei Nockenwellen einer Brennkraftmaschine wirksam ist, wobei durch Verstellen der Kette die relative Drehlage der beiden Nockenwellen zueinander geändert wird. Dieser Ausführung haftet zum einen der Nachteil an, daß der Verstellvorgang teils mit aufwendigen Getrieben erfolgt, die eine weitgehend verzögerungsfreie Änderung der relativen Nockenwellendrehlage erschwert. Außerdem sind für die Realisierung der dargestellten Ausführungsformen noch umfassende konstruktive und empirische Untersuchungen erforderlich, die einen beachtlichen Kostenaufwand nach sich ziehen.

Es ist die Aufgabe der Erfindung, eine solche Spann- und Verstellvorrichtung so weiterzuentwickeln, daß bei geringem Kostenaufwand eine hohe Betriebssicherheit gewährleistet wird.

Zur Lösung dieser Aufgabe dienen die kennzeichnenden Merkmale des Anspruchs 1. Wenn eine Funktionstrennung in der Weise erfolgt, daß eine aus zwei

Hydraulikkolben und einer sie gegenläufig zueinander an die Kettentrums andrückenden Feder bestehende Spannvorrichtung, zum Verstellen der Kette quer zu ihr verschoben wird, wird die Kette unabhängig von eventuellen Störungen in der Verstellmechanik bzw. deren Ansteuerung immer unter Spannung gehalten. Es wird so ein funktionssicherer Betrieb der Brennkraftmaschine sichergestellt. In vorteilhafter Weiterbildung der Erfindung besteht die Spann- und Verstellvorrichtung aus einem äußeren Hohlkolben, einem in ihm längsgeführten inneren Hohlkolben und einer zentrisch zwischen den beiden Kolben verspannten Schraubenfeder. Der äußere Kolben besitzt an seiner Außenseite einen Hydraulikanschluß, durch dessen Druckbeaufschlagung die Spanneinrichtung quer zur Kette verschoben werden kann.

Die Unteransprüche enthalten zusätzliche konstruktive und steuerungstechnische Besonderheiten der Spann- und Verstellvorrichtung.

Ein Ausführungsbeispiel der Erfindung ist in der Zeichnung dargestellt und wird nachfolgend erläutert.

Es zeigen:
- Fig. 1: schematische Darstellung eines Nockenwellenantriebs mit einer Spann- und Verstellvorrichtung,
- Fig. 2: Querschnitt der Spann- und Verstellvorrichtung in einer ersten Stellung,
- Fig. 3: Spann- und Verstellvorrichtung in einer zweiten Stellung,
- Fig. 4: alternative Ausführung der Spannvorrichtung.

Von einer Kurbelwelle 1 einer Brennkraftmaschine ist mit einem Zahnriemen oder einer Kette eine die Auslaßventile betätigende Auslaßnockenwelle 2 angetrieben. Die Auslaßnockenwelle 2 treibt mit einer Kette 4 eine die Einlaßventile steuernde Einlaßnockenwelle 3 an. Am Lasttrum 6 und Lostrum 5 der Kette 4 greift von der Ketteninnenseite her eine Spannvorrichtung 7 an.

Die Spannvorrichtung 7 besteht aus einem hohlen äußeren Hydraulikkolben 8, einem in ihm längsgeführten inneren ebenfalls hohlen Hydraulikkolben 9 und einer in dem Hohlraum 10 zwischen den beiden Hydraulikkolben verspannten Schraubendruckfeder 11. Zusätzlich zur Kraft der Schraubendruckfeder 11 sind die Hydraulikkolben 8, 9 über einen Druckanschluß 12 an einem Ringraum 13 zwischen den beiden Hydraulikkolben 8, 9 mit Hydraulikdruck beaufschlagt. Am inneren Hydraulikkolben 9 ist ein Spannschuh 14 befestigt, der am Lostrum 5 der Kette 4 angreift. Ein endseitig im äußeren Hydraulikkolben 8 befestigter Spannschuh 15 drückt auf das Lasttrum 6 der Kette 4. Am anderen Ende ist der äußere Hydraulikkolben 8 mit einem Bund 16 versehen, der in einer Bohrung 17 des Gehäuses 18 abgedichtet längsgeführt ist. Zwischen dem Bund 16 und einer im Gehäuse 18 befestigten Führungshülse 19 ist eine Schraubendruckfeder 20 verspannt. An dieser Stelle, an der inneren Stirnfläche 16' des Bundes 16 weist die Bohrung 17 des Gehäuses 18 einen ersten Hydraulikanschluß 21 auf. Ein zweiter Hydraulikanschluß 22 liegt an der Bohrung 17, an der äußeren Stirnfläche 16'' des Bundes 16. Dieser zweite Hydraulikanschluß 22 ist über einen Druckkanal 23 an eine Gehäusebohrung 24 angeschlossen; mit ihr steht der erste Hydraulikanschluß 21 über einen weiteren Druckkanal 25 in Verbindung. An beiden Endseiten münden in die Gehäusebohrung 24 Rücklaufkanäle 26 und 27. Etwa mittig liegt an der Gehäusebohrung 24 ein Verbindungskanal 28 zu einem von einer Pumpe versorgten Hauptkanal 29, aus dem über einen Druckkanal 30 der erste Druckanschluß 12 dauernd mit Hydraulikdruck beaufschlagt ist.

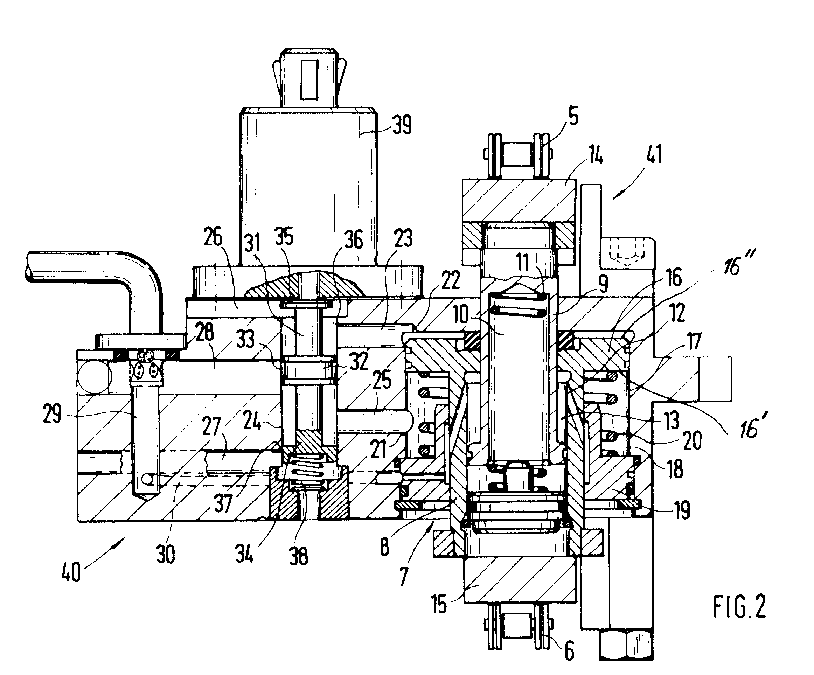

Die Druckkanäle 23, 25 zu den beiden Druckanschlüssen 21, 22 sind wechselweise mit Hydraulikdruck beaufschlagt. Hierzu dient ein in der Gehäusebohrung 24 längsgeführter Regelschieber 31, der mit einem Steuerkolben 32 die Mündungsstelle 33 des Verbindungskanals 28 zur Gehäusebohrung 24 steuert. In der Stellung nach Fig. 2 gelangt Hydraulikdruck in den Druckkanal 25. Eine Verbindung zum Druckkanal 23 ist durch den in der Gehäusebohrung 24 abgedichtet geführten Steuerkolben 32 verhindert. Zugleich wird das untere Ende der Gehäusebohrung durch einen unteren Ventilzylinder 34 verschlossen. Aus dem oberen Ende der Gehäusebohrung 24 ist der zweite Ventilzylinder 35 ausgefahren, so daß das zwischen dem Druckanschluß 22 und der Rücklaufleitung 26 gelegene Ventil 36 offen ist.

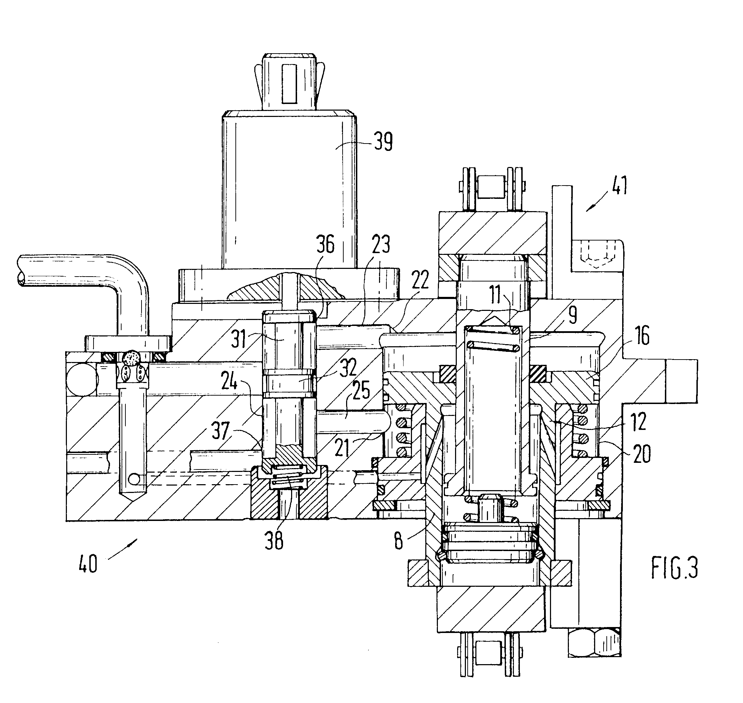

Umgekehrt ist nach Fig. 3 das obere Ventil 36 verschlossen, das untere Ventil 37 offen. Die Druckkanäle 23, 24 dienen also je nach Stellung des Regelschiebers 31 wechselweise zum Druckaufbau und als Rücklaufleitung. Der durch eine Feder 38 axial vorgespannter Regelschieber 31 wird von einem Elektromagnet 39 in die beiden möglichen Schaltstellungen axial verschoben.

Bei Bedarf könnte die Umstellung der Druckversorgung für die Druckkanäle 23, 25 auch kontinuierlich erfolgen, so daß der Steuerkolben 32 jede beliebige Zwischenstellung einnehmen kann und der Druckaufbau in den Druckkanälen 23, 24 proportional einer die Stromversorgung des Elektromagneten 39 steuernden Kenngröße der Brennkraftmaschine erfolgen kann.

Um unnötig hohe, bei kaltem noch zähen Hydrauliköl auftretende Verstellkräfte zu vermeiden, wird der Elektromagnet erst oberhalb einer Temperatur der Brennkraftmaschine von ca. 40°C geschaltet.

Die Lage des als Verstellglied dienenden Bundes 16 kann durch einen Sensor erfaßt werden, dessen Signal als Testsignal für die Funktionsfähigkeit der Verstellvorrichtung oder als Regelgröße bei kontinuierlicher Verstellung der Kette verwendbar ist. Bei defekter Verstellfunktion wird die Einlaßnockenwelle selbsttätig in die relative Drehlage gebracht, die sie normalerweise nur im Leerlauf der Brennkraftmaschine einnimmt.

Für Brennkraftmaschinen mit zwei Zylinderreihen kann es aus Raum- und Kostengründen vorteilhaft sein, die Spann- und Verstellvorrichtung in ein Steuerungsteil 40 und zwei an den beiden Zylinderreihen angeordneten Spann- und Verstellteile 41 aufzutrennen. Das Steuerungsteil 40 umfaßt im wesentlichen den Hauptkanal 29, Verbindungskanal 28 und die Ventile 36, 37, sowie den sie steuernden Regelschieber 31 mit Elektromagnet 39. Das Spann- und Verstellteil 41 wird gebildet aus den beiden Hydraulikkolben 8, 9, den Druckanschlüssen 12, 21, 22; sowie den Schrauben-Druckfedern 11, 20.

Anstelle des Nockenwellenantriebs mit einer Kette 4 könnte auch ein Zahnriemen treten, an dem die erfindungsgemäße Spann- und Verstellvorrichtung wirksam wird.

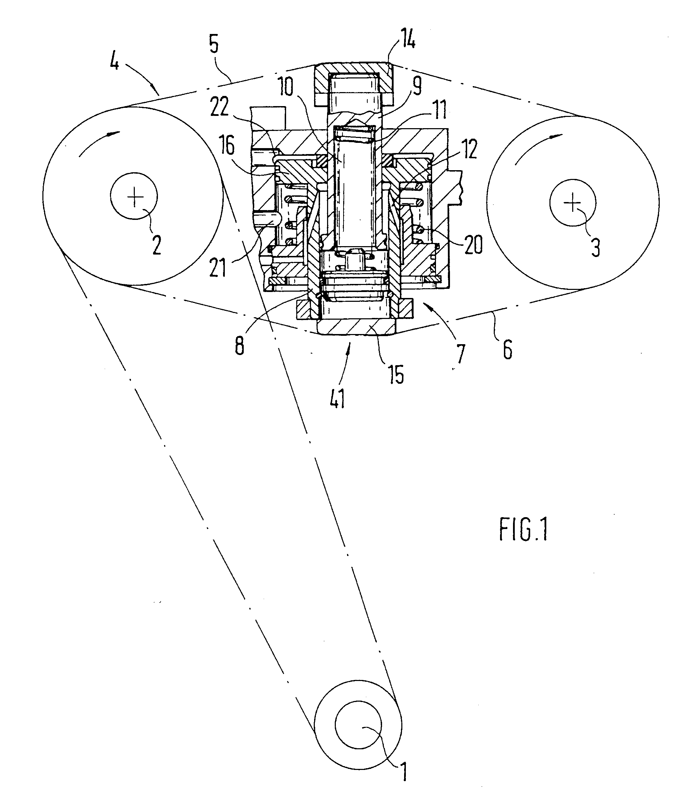

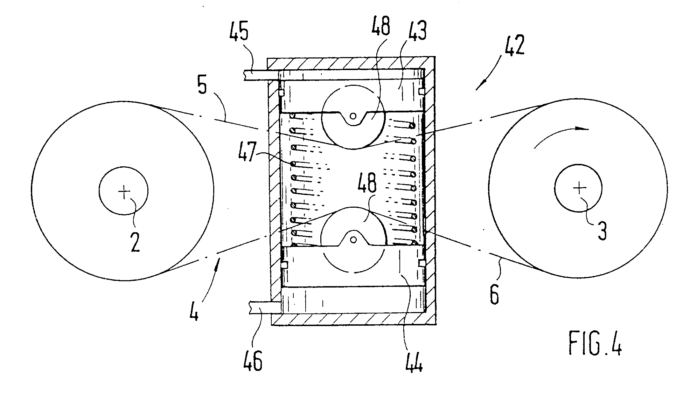

Nach den Fig. 1 bis 3 greift die Spannvorrichtung an der Innenseite der Kette 4 an. Alternativ hierzu ist es gemäß Fig. 4 auch möglich, die Kette 4 von ihrer Außenseite her zu verspannen. Die Spannvorrichtung 42 besteht hierbei aus zwei Hydraulikkolben 43, 44, die über Kanäle 45, 46 mit Druck beaufschlagt sind, wobei eine zwischen den Hydraulikkolben 43, 44 liegende

Feder 47 verspannt wird. An beiden Hydraulikkolben 43, 44 sind Spannrollen 48 befestigt, mit denen die Kette 4 nach innen verspannt wird.

## Patentansprüche

1. Vorrichtung zum Spannen und Verstellen eines als Kette (4) ausgebildeten Umschlingungstriebs, mit dem eine Nockenwelle (2) einer Brennkraftmaschine eine zweite Nockenwelle (3) antreibt, wobei durch Verstellen der Kette (4) mit einer quer zur Kette (4) wirkenden Spannvorrichtung (7) die relative Drehlage der Nockenwellen (2, 3) zueinander geändert wird, welche Spannvorrichtung (7) zum Verstellen der Kette (4) quer zur letzteren verschoben wird, dergestalt, daß das Lostrum (6) der Kette (4) verlängert und das Lasttrum (5) verkürzt oder das Lostrum (6) verkürzt und das Lasttrum (5) verlängert wird und darüber hinaus diese Spannvorrichtung hydraulisch betätigt ist, **dadurch gekennzeichnet**, daß die Spannvorrichtung (7) aus einem hohlen äußeren Hydraulikkolben (8), einem in ihm längsgeführten inneren, ebenfalls hohen Hydraulikkolben (9) und einer in dem Hohlraum (10) zwischen den beiden Hydraulikkolben (8, 9) verspannten Schrauben-Druckfeder (11) besteht,
daß zusätzlich zur Kraft der Schrauben-Druckfeder (11) die Hydraulikkolben (8, 9) über einen Druckanschluß (12) zwischen den beiden Hydraulikkolben (8, 9) mit Hydraulikdruck permanent beaufschlagt sind,
daß der äußere Hydraulikkolben (8) über Druckkanäle (23, 25) wechselweise mit Druck beaufschlagbar ist und
daß die beiden Hydraulikkolben (8, 9) in einem Gehäuse (18) längsgeführt sind.

2. Vorrichtung nach Anspruch 1, **dadurch gekennzeichnet**, daß die Spannvorrichtung (7) über einen ersten Druckanschluß (12) hydraulisch betätigt ist und über einen zweiten Druckanschluß (21) ebenfalls hydraulisch quer zur Kette (4) verschiebbar ist.

3. Vorrichtung nach Anspruch 1, **gekennzeichnet durch** eine Spannvorrichtung (7) mit einem ersten in einem Gehäuse (18) längsgeführten, das Lasttrum der Kette (4) verspannenden Hydraulikkolben (9) und einem zweiten zu ihm koaxial im Gehäuse (18) geführten, das Lostrum (6) der Kette (4) verspannenden Hydraulikkolben (8) sowie einem ersten Druckanschluß (12), der zwischen den beiden Hydraulikkolben (8, 9) gelegen ist.

4. Vorrichtung nach Anspruch 3, **dadurch gekennzeichnet**, daß in einem äußeren hohen Hydraulikkolben (8) ein innerer ebenfalls hohler Hydraulikkolben (9) längsgeführt ist und daß der erste Druckanschluß (12) in einem Ringraum (13) zwischen den beiden Hydraulikkolben (8, 9), der zweite Druckanschluß (21) außen an einem der beiden Hydraulikkolben (8, 9) angebracht ist.

5. Vorrichtung nach Anspruch 4, **dadurch gekennzeichnet**, daß der äußere Hydraulikkolben (8) endseitig einen im Gehäuse (18) geführten Bund (16) aufweist und daß der zweite Druckanschluß (21) im Gehäuse (18) an der einen Stirnfläche (16') des Bundes (16) angeschlossen ist und ein dritter Hydraulikanschluß (22) im Gehäuse (18) an der anderen Stirnfläche (16'') des Bundes (16) vorgesehen ist.

6. Vorrichtung nach Anspruch 5, **dadurch gekennzeichnet**, daß zwischen der Stirnfläche (16'') des Bundes (16) und einer im Gehäuse (18) befestigten Führungshülse (19) für den äußeren Hydraulikkolben (8) eine Schrauben-Druckfeder (20) verspannt ist.

7. Vorrichtung nach einem oder mehreren der vorangehenden Ansprüche, **dadurch gekennzeichnet**, daß in einem zentralen Hohlraum (10) zwischen den beiden Hydraulikkolben (8, 9) eine Schrauben-Druckfeder (11) verspannt ist.

8. Vorrichtung nach einem oder mehreren der vorangehenden Ansprüche, **dadurch gekennzeichnet**, daß zu den drei Druckanschlüssen (12, 21, 22) drei Druckkanäle (30, 23, 25) führen, die von einem gemeinsamen Hauptkanal (29) mit Pumpendruck versorgt werden, wobei der Druckkanal (30) für den ersten Druckanschluß (12) unmittelbar am Hauptkanal (29), der zweite und dritte Kanal (23, 25) über eine durch einen Regelschieber (31) gesteuerte Mündungsstelle (33) an den Hauptkanal (29) angeschlossen sind.

9. Vorrichtung nach Anspruch 8, **dadurch gekennzeichnet**, daß der Regelschieber (31) von einem Elektromagnet (39) in Abhängigkeit von Kenngrößen der Brennkraftmaschine im Zweipunktbetrieb oder kontinuierlich so betätigbar ist, daß der zweite Druckkanal (23) oder dritte Druckkanal (25) mit dem Hauptkanal (29) verbunden ist.

10. Vorrichtung nach Anspruch 9, **dadurch gekennzeichnet**, daß beim Druckbeaufschlagen des einen Druckkanals (23 oder 25) der andere Druckkanal (25 oder 23) zum drucklosen Ölrücklauf dient.

11. Vorrichtung nach Anspruch 10, **dadurch gekennzeichnet**, daß jeder der beiden Druckkanäle (23 bzw. 25) über ein Ventil (36 bzw. 37) mit einem Rücklaufkanal (26 bzw. 27) in Verbindung steht, wobei die Ventile (36 bzw. 37) durch Ventilzylinder (35, 36) des Regelschiebers (31) verschließbar sind.

12. Vorrichtung nach Anspruch 8, **dadurch gekennzeichnet**, daß zum kontinuierlichen Verschieben des Regelschiebers (31) die Stromzufuhr zum Elektromagnet (39) proportional zu einer Kenngröße der Brennkraftmaschine verändert wird.

13. Vorrichtung nach einem oder mehreren der vorangehenden Ansprüche, **dadurch gekennzeichnet**, daß die Druckkanäle (23, 25) und Rücklaufkanäle (26, 27) an eine Gehäusebohrung (24) angeschlossen sind, in der der Regelschieber (31) abgedichtet längsgeführt ist und die endseitig durch die Ventilzylinder (35, 36) des Regelschiebers (31) verschließbar sind.

14. Vorrichtung nach Anspruch 9, **dadurch gekennzeichnet**, daß der Regelschieber (31) von dem Elektromagnet (39) erst oberhalb einer Temperatur der Brennkraftmaschine von ca. 40° C betätigt wird.

15. Vorrichtung nach einem oder mehreren der vorangehenden Ansprüche, **dadurch gekennzeichnet**, daß bei defekter Verstellfunktion die Einlaßnockenwelle (3) selbsttätig in die dem Leerlauf der Brennkraftmaschine zugeordnete relative Drehlage gebracht wird.

16. Vorrichtung nach einem oder mehreren der vorangehenden Ansprüche, **dadurch gekennzeichnet**, daß die Lage des Bundes (16) durch einen Sensor erfasst wird, dessen Signal als Regelgröße bei kontinuierlicher Verstellung und/oder als Testsignal für die Funktionsfähigkeit der Spann- und Verstellvorrichtung dient.

17. Vorrichtung nach einem oder mehreren der vorangehenden Ansprüche, insbesondere für Brennkraftmaschinen mit zwei Zylinderreihen, **dadurch gekennzeichnet**, daß ein Steuerungsteil (40) für den Hydraulikdruck, bestehend aus dem Hauptkanal (29), Verbindungskanal (28) und den Ventilen (36, 37) sowie dem sie steuernden Regelschieber (31) mit Elektromagnet (39) in einem gesonderten Bauteil untergebracht ist, von dem Druckkanäle (23, 25, 30) zu einem an einer Zylinderreihe angeordneten Spann- und Verstellteil (41) ausgehen, wobei das Spann- und Verstellteil die beiden Hydraulikkolben (8, 9), die Druckanschlüsse (12, 21, 22) sowie die Schrauben-Druckfedern (11, 20) umfasst.

18. Vorrichtung nach Anspruch 1, **dadurch gekennzeichnet**, daß eine Spannvorrichtung (42) an der Außenseite des Lostrums (6) und des Lasttrums (5) der Kette (4) angreift.

19. Vorrichtung nach Anspruch 18, **dadurch gekennzeichnet**, daß die Spannvorrichtung mit Spannrollen (48) angreift.

## Claims

1. A device for tensioning and adjusting a circulatory drive which is constructed in the form of a chain (4) and by which a camshaft (2) of an internal-combustion engine drives a second camshaft (3), wherein the relative rotational position of the camshafts (2, 3) is changed with respect to each other by adjusting the chain (4) with a tensioning device (7) acting transversely to the chain (4), the tensioning device (7) being displaced transversely to the chain (4) in order to adjust the said chain (4), in such a way that the slack run (6) of the chain (4) is lengthened and the loaded run (5) is shortened or the slack run (6) is shortened and the loaded run (5) is lengthened and, in addition, the said tensioning device is actuated hydraulically, **characterized in that** the tensioning device (7) comprises a hollow outer hydraulic piston (8), an inner, likewise hollow hydraulic piston (9) guided longitudinally therein and a helical compression spring (11) stressed in the cavity (10) between the two hydraulic pistons (8, 9), in addition to the force of the helical compression spring (11) the hydraulic pistons (8, 9) are constantly acted upon by hydraulic pressure by way of a pressure connexion (12) between the two hydraulic pistons (8, 9), the outer hydraulic piston (8) can be acted upon by pressure alternately by way of pressure ducts (23, 25), and the two hydraulic pistons (8, 9) are guided longitudinally in a housing (18).

2. A device according to Claim 1, **characterized in that** the tensioning device (7) is actuated hydraulically by way of a first pressure connexion (12) and is displaceable transversely to the chain (4) likewise hydraulically by way of a second pressure connexion (21).

3. A device according to Claim 1, **characterized by** a tensioning device (7) with a first hydraulic piston (9), guided longitudinally in a housing (18) and tensioning the loaded run of the chain (4), and a second hydraulic piston (8), guided coaxially with the said first hydraulic piston (9) in the housing (18) and tensioning the slack run (6) of the chain (4), as well as a first pressure connexion (12) arranged between the two hydraulic pistons (8, 9).

4. A device according to Claim 3, **characterized in that** an inner hollow hydraulic piston (9) is guided longitudinally in an outer, likewise hollow hydraulic piston (8), and the first pressure connexion (12) is arranged in an annular space (13) between the two hydraulic pistons (8, 9), and the second pressure connexion (21) is attached to one of the two hydraulic pistons (8, 9) on the outside.

5. A device according to Claim 4, **characterized in that** the end of the outer hydraulic piston (8) has a collar (16) guided in the housing (18), and the second pressure connexion (21) is attached in the housing (18) to one front face (16') of the collar (16), and a third pressure connexion (22) is provided in the housing (18) on the other front face (16'') of the collar (16).

6. A device according to Claim 5, **characterized in that** a helical compression spring (20) is stressed between the front face (16'') of the collar (16) and a guide sleeve (19 secured in the housing (18) for the outer hydraulic piston (8).

7. A device according to one or more of the preceding Claims, **characterized in that** a helical compression spring (11) is stressed in a central cavity (10) between the two hydraulic pistons (8, 9).

8. A device according to one or more of the preceding Claims, **characterized in that** three pressure ducts (30, 23, 25) supplied with pump pressure from a common main duct (29) lead to the three pressure connexions (12, 21, 22), wherein the pressure duct (30) for the first pressure connexion (12) is connected directly to the main duct (29), and the second and third ducts (23, 25) are connected to the main duct (29) by way of an opening (33) controlled by a regulating slide (31).

9. A device according to Claim 8, **characterized in that** the regulating slide (31) is actuable by an electromagnet (39) in on-off operation or continuously as a function of characteristic values of the internal-combustion engine, in such a way that the second pressure duct (23) or the third pressure duct (25) is connected to the main duct (29).

10. A device according to Claim 9, **characterized in that** when one pressure duct (23 or 25) is acted upon with pressure the other pressure duct (25 or 23) is used for the return of oil without pressure.

11. A device according to Claim 10, **characterized in that** each of the two pressure ducts (23 and 25 respectively) is connected to a return duct (26 and 27 respectively) by way of a valve (36 and 37 respectively), wherein the valves (36 and 37) are closable by valve cylinders (35, 36) of the regulating slide (31).

12. A device according to Claim 8, **characterized in that** for the continuous displacement of the regulating slide (31) the current supply to the electromagnet (39) is altered in proportion to a characteristic value of the internal-combustion engine.

13. A device according to one or more of the preceding Claims, **characterized in that** the pressure ducts (23, 25) and return ducts (26, 27) are connected to a housing bore (24) in which the regulating slide (31) is guided longitudinally in a sealed manner and which [is] closable at the end by the valve cylinders (35, 36) of the regulating slide (31).

14. A device according to Claim 9, **characterized in that** the regulating slide (31) is actuated by the electromagnet (39) only above a temperature of the internal-combustion engine of about 40°C.

15. A device according to one or more of the preceding Claims, **characterized in that** in the event of a defective adjustment function the inlet camshaft (3) is moved automatically into the relative rotational position associated with the idling of the internal-combustion engine.

16. A device according to one or more of the preceding Claims, **characterized in that** the position of the collar (16) is detected by a sensor, the signal of which acts as a regulating value during continuous adjustment and/or as a test signal for the proper functioning of the tensioning and adjustment device.

17. A device according to one or more of the preceding Claims, in particular for internal-combustion engines with two rows of cylinders, **characterized in that** a control part (40) for the hydraulic pressure, comprising the main duct (29), the connecting duct (28) and the valves (36, 37) as well as the regulating slide (31) controlling them is housed together with the electromagnet (39) in a separate component, from which pressure ducts (23, 25, 30) lead to a tensioning and adjustment part (41) mounted on one row of cylinders, wherein the tensioning and adjustment part includes the two hydraulic pistons (8, 9), the pressure connexions (12, 21, 22) and the helical compression springs (11, 20).

18. A device according to Claim 1, **characterized in that** a tensioning device (42) engages on the outside of the slack run (6) and the loaded run (5) of the chain (4).

19. A device according to Claim 18, **characterized in that** the tensioning device engages with tensioning rollers (48).

## Revendications

1. Dispositif pour tendre et régler un mécanisme d'entraînement à boucle fermée constitué par une chaîne (4), avec laquelle un arbre à cames (2) d'un moteur à combustion interne entraîne un second arbre à cames (3), la position en rotation relative des arbres à cames (2, 3) étant modifiée l'une par rapport à l'autre par réglage de la chaîne (4) par un dispositif tendeur (7) agissant transversalement à la chaîne (4), lequel dispositif tendeur (7) est déplacé transversalement à la chaîne (4) pour régler cette dernière, de manière que le brin mou (6) de la chaîne (4) soit allongé et que le brin de charge (7) soit raccourci ou que le brin mou (6) soit raccourci et que le brin de charge (7) soit allongé, ce dispositif tendeur étant en outre actionné hydrauliquement, caractérisé en ce que le dispositif tendeur (7) est constitué par un piston hydraulique externe creux (8), un piston hydraulique interne également creux (9) et guidé longitudinalement dans le premier, et un ressort hélicoïdal de compression (11) serré dans l'espace creux (10) compris entre les deux pistons hydrauliques (8, 9), en ce qu'en plus de la force du ressort hélicoïdal de compression (11), les pistons hydrauliques (8, 9) reçoivent en permanence une pression hydraulique par un raccord de pression (12) prévu entre les deux pistons hydrauliques (8, 9), en ce que le piston hydraulique externe (8) reçoit la pression alternativement par des canalisations de pression (23, 25) et en ce que les deux pistons hydrauliques (8, 9) sont guidés longitudinalement dans un carter (18).

2. Dispositif selon la revendication 1, caractérisé en ce que le dispositif tendeur (7) est actionné hydrauliquement par l'intermédiaire d'un premier raccord de pression (12) et peut être déplacé également hydrauliquement transversalement à la chaîne (4) par l'intermédiaire d'un second raccord hydraulique (21).

3. Dispositif selon la revendication 1, caractérisé par un dispositif tendeur (7) comprenant un premier piston hydraulique (9) guidé longitudinalement dans un carter (18) et tendant le brin de charge de la chaîne (4) et un second piston hydraulique (8) guidé coaxialement par rapport au premier dans le carter (18) et tendant le brin mou (6) de la chaîne (4), ainsi que par un premier raccord de pression (12) qui est disposé entre les deux pistons hydrauliques (8, 9).

4. Dispositif selon la revendication 3, caractérisé en ce qu'un piston hydraulique interne (9) également creux est guidé longitudinalement dans un piston hydraulique externe creux (8) et en ce que le premier raccord de pression (12) est prévu dans l'espace annulaire (13) compris entre les deux pistons hydrauliques (8, 9), le second raccord de pression (21) étant disposé à l'extérieur de l'un des deux pistons hydrauliques (8, 9).

5. Dispositif selon la revendication 4, caractérisé en ce que le piston hydraulique externe (8) comprend à une extrémité une collerette (16) guidée dans le carter (18) et en ce que le second raccord de pression (21) est raccordé dans le carter (18) à une surface frontale (16') de la collerette (16) et un troisième raccord hydraulique (22) est prévu dans le carter (18) sur l'autre surface frontale (16') de la collerette (16).

6. Dispositif selon la revendication 5, caractérisé en ce qu'un ressort hélicoïdal de compression (20) est serré entre la surface frontale (16'') de la collerette (16) et une douille de guidage (19) destinée au piston hydraulique externe (8), qui est fixée dans le carter (18).

7. Dispositif selon l'une ou plusieurs des revendications précédentes, caractérisé en ce qu'un ressort hélicoïdal de compression (11) est serré dans un espace creux central (10) compris entre les deux pistons hydrauliques (8, 9).

8. Dispositif selon l'une ou plusieurs des revendications précédentes, caractérisé en ce que trois canalisations de pression (30, 23, 25) conduisent aux trois raccords de pression (12, 21, 22), canalisations qui sont alimentées par la pression de la pompe par une canalisation principale commune (29), la canalisation de pression (30) destinée au premier raccord de pression (12) étant raccordée directement à la canalisation principale (29), les seconde et troisième canalisations (23, 25) étant raccordées à la canalisation principale (23) par une position d'embouchure (33) commandée par un coulisseau de régulation (31).

9. Dispositif selon la revendication 8, caractérisé en ce que le coulisseau de régulation (31) peut être actionné par un électroaimant (39) en fonction de grandeurs caractéristiques du moteur à combustion interne selon un fonctionnement à deux positions ou de façon continue, et en ce que la seconde canalisation de pression (23) ou la troisième canalisation de pression (25) est reliée à la canalisation principale (29).

10. Dispositif selon la revendication 9, caractérisé en ce que lors de l'alimentation en pression d'une canalisation de pression (23 ou 25), l'autre canalisation de pression (25 ou 23) sert de retour sans pression pour l'huile.

11. Dispositif selon la revendication 10, caractérisé en ce que chacune des deux canalisations de pression (23 ou 25) est en liaison par l'intermédiaire d'une soupape (36 ou 37) avec une canalisation de retour (26 ou 27), les soupapes (36 ou 37) pouvant être fermées par des cylindres de soupape (35, 36) du coulisseau de régulation (31).

12. Dispositif selon la revendication 8, caractérisé en ce que pour déplacer de façon continue le coulisseau de régulation (31), l'alimentation en courant de l'électroaimant est modifiée proportionnellement à une grandeur caractéristique du moteur à combustion interne.

13. Dispositif selon l'une ou plusieurs des revendications précédentes, caractérisé en ce que les canalisations de pression (23, 25) et les canalisations de retour (26, 27) sont raccordées à un alésage (24) du carter, dans lequel le coulisseau de régulation (31) est guidé longitudinalement de façon étanche, et qui peut être fermée à ses extrémités par les cylindres de soupape (35, 36) du coulisseau de régulation (31).

14. Dispositif selon la revendication 9, caractérisé en ce que le coulisseau de régulation (31) est n'actionné par l'électroaimant (39) qu'au-dessus d'une température du moteur à combustion interne qui est d'environ 40°C.

15. Dispositif selon l'une ou plusieurs des revendications précédentes, caractérisé en ce que dans le cas d'un fonctionnement de réglage défectueux, l'arbre à cames d'admission (3) est amené automatiquement dans la position de rotation relative associée à la marche à vide du moteur à combustion interne.

16. Dispositif selon l'une ou plusieurs des revendications précédentes, caractérisé en ce que la position de la collerette (16) est détectée par un capteur dont le signal sert de grandeur de régulation dans le cas d'un réglage continu et/ou de signal test pour la capacité de fonctionnement du dispositif tendeur et de réglage.

17. Dispositif selon l'une ou plusieurs des revendications précédentes, notamment pour des moteurs à combustion interne à deux rangées de cylindres, caractérisé en ce qu'une partie de commande (40) de la pression hydraulique, constituée par la canalisation principale (29), la canalisation de liaison (28) et les soupapes (36, 37) ainsi que par le coulisseau de régulation (31) qui les commande est disposée avec l'électroaimant (39) dans un élément séparé duquel partent les canalisations de pression (23, 25, 30) allant à une partie de mise sous tension et de régulation (41) disposée sur une rangée de cylindres, la partie de mise sous tension et de réglage comprenant les deux piston (8, 9), les raccords de pression (12, 21, 22) ainsi que les ressorts hélicoïdaux de compression (11, 20).

18. Dispositif selon la revendication 1, caractérisé en ce qu'un dispositif tendeur (42) est en engagement avec le côté externe du brin mou (6) et du brin de charge (5) de la chaîne (4).

19. Dispositif selon la revendication 18, caractérisé en ce que le dispositif tendeur est en engagement au moyen de rouleaux tendeurs (48).
